Europäisches Patentamt

European Patent Office

Office européen des brevets

(19)

(11) EP 0 802 883 B1

## (12) FASCICULE DE BREVET EUROPEEN

(45) Date de publication et mention
de la délivrance du brevet:
**14.04.1999 Bulletin 1999/15**

(21) Numéro de dépôt: **95942210.6**

(22) Date de dépôt: **22.12.1995**

(51) Int Cl.$^6$: **C01F 11/18**

(86) Numéro de dépôt international:
**PCT/EP95/05175**

(87) Numéro de publication internationale:
**WO 96/21620 (18.07.1996 Gazette 1996/33)**

(54) **PROCEDE DE COPRODUCTION DE CARBONATE DE CALCIUM ET D'HYDROXYDE DE SODIUM**

VERFAHREN ZUR COPRODUKTION VON KALZIUMKARBONAT UND NATRIUMHYDROXID

METHOD FOR COPRODUCING CALCIUM CARBONATE AND SODIUM HYDROXIDE

(84) Etats contractants désignés:
**AT DE FR NL SE**

(30) Priorité: **11.01.1995 FR 9500341**

(43) Date de publication de la demande:
**29.10.1997 Bulletin 1997/44**

(73) Titulaire: **SOLVAY (Société Anonyme)
B-1050 Bruxelles (BE)**

(72) Inventeurs:
• **NINANE, Léon
F-54110 Dombasle-sur-Meurthe (FR)**
• **CRIADO, Claude
F-54110 Dombasle-sur-Meurthe (FR)**
• **FEYS, Francis
F-54110 Dombasle-sur-Meurthe (FR)**

(74) Mandataire: **Anthoine, Paul et al
SOLVAY
Département de la Propriété Industrielle
310, rue de Ransbeek
1120 Bruxelles (BE)**

(56) Documents cités:
EP-A- 0 413 385
US-A- 1 188 505
US-A- 2 062 255
FR-A- 1 300 007
US-A- 1 862 176

EP 0 802 883 B1

## Description

L'invention concerne un procédé de coproduction de carbonate de calcium et d'hydroxyde de sodium.

Le carbonate de calcium et l'hydroxyde de sodium sont utilisés en grande quantité dans l'industrie du papier, fréquemment sous la forme de suspensions aqueuses de carbonate de calcium et de lessives caustiques. La fabrication de ces produits directement sous ces formes dans des installations satellites sur le site même des usines papetières apparaît intéressante. Il est connu de longue date que la caustification d'une solution aqueuse de carbonate de sodium au moyen d'un lait de chaux génère du carbonate de calcium et de l'hydroxyde de sodium. Ce procédé, classiquement dénommé caustification, conduit à la formation de 2 moles d'hydroxyde de sodium par mole de carbonate de calcium produite, rapport fixé par la stoechiométrie de la réaction chimique mise en jeu ($Na_2CO_3 + Ca(OH)_2 \rightarrow 2\ NaOH + CaCO_3$). La caustification ne permet donc pas d'obtenir les produits recherchés dans des proportions variables, adaptées aux besoins spécifiques du site d'exploitation. En outre, la qualité du carbonate de calcium produit par caustification ne convient pas pour certaines qualités de papier, à cause notamment d'une distribution granulométrique trop étendue et d'une teneur résiduelle excessive en hydroxyde de calcium. Le carbonate de calcium destiné à ces qualités de papier est le plus souvent obtenu par carbonatation d'un lait de chaux au moyen d'un gaz contenant du $CO_2$, procédé classiquement dénommé carbonatation.

Dans le brevet US-1,188,505, on a proposé un procédé de fabrication de carbonate de calcium utilisable notamment comme matière de charge dans la fabrication du papier, selon lequel on soumet une suspension de carbonate de calcium obtenue par caustification à une carbonatation, afin de transformer en carbonate de calcium l'hydroxyde de calcium qui pourrait subsister dans la suspension. Ce procédé ne permet cependant pas d'obtenir du carbonate de calcium de qualité équivalente à celle du carbonate de calcium préparé par carbonatation ni de varier le rapport des quantités de carbonate de calcium et d'hydroxyde de sodium produits.

La présente invention vise à remédier aux inconvénients cités plus haut, en fournissant un procédé de coproduction de carbonate de calcium et d'hydroxyde de sodium qui réalise un rapport carbonate de calcium / hydroxyde de sodium supérieur au rapport stoechiométrique de la réaction de caustification et qui, simultanément, fournit du carbonate de calcium de qualité équivalente au carbonate de calcium obtenu par carbonatation.

En conséquence, l'invention concerne un procédé de coproduction de carbonate de calcium et d'hydroxyde de sodium, qui comprend les étapes (a) à (e) suivantes, dans lesquelles

(a) on fait réagir du carbonate de sodium avec du lait de chaux, de manière à obtenir un milieu aqueux comprenant du carbonate de calcium solide et de l'hydroxyde de sodium;

(b) on sépare dudit milieu, d'une part, une lessive d'hydroxyde de sodium et, d'autre part, ledit carbonate de calcium solide;

(c) on mélange une partie au moins dudit carbonate de calcium solide avec une quantité suffisante de lait de chaux de manière à obtenir un brouet de carbonate de calcium et d'hydroxyde de calcium, présentant un rapport pondéral entre l'hydroxyde de calcium et le carbonate de calcium au moins égal à 0,1;

(d) on met en contact ledit brouet avec un gaz comprenant du $CO_2$; et

(e) on recueille de l'étape (d) une suspension aqueuse de carbonate de calcium.

L'invention combine avantageusement une étape (a) de caustification et une étape (d) de carbonatation. On a en effet observé de manière inattendue que certaines propriétés du carbonate de calcium obtenu par caustification, en particulier la distribution granulométrique des particules, étaient améliorées lorsque celui-ci, en mélange avec du lait de chaux, est soumis à une carbonatation ultérieure.

Le lait de chaux mis en oeuvre à l'étape (a) est une suspension aqueuse d'hydroxyde de calcium. Le lait de chaux peut être préparé par tout moyen connu, par exemple en mettant de la chaux éteinte ou de la chaux vive en suspension dans une quantité d'eau telle qu'on obtienne une suspension stable d'hydroxyde de calcium. La concentration du lait de chaux en hydroxyde de calcium est typiquement de 50 à 400 g/l, avantageusement de 100 à 250 g/l. La température à laquelle le lait de chaux est préparé et stocké avant d'être traité à l'étape (a) est généralement de 10 à 90 °C, par exemple de 40 à 60 °C.

Dans une première forme d'exécution du procédé selon l'invention, le carbonate de sodium est mis en oeuvre, à l'étape (a), sous la forme d'une solution aqueuse. Dans cette forme d'exécution du procédé, la solution de carbonate de sodium peut être préparée par dissolution d'une poudre de carbonate de sodium dans une quantité d'eau telle qu'on obtienne une solution stable. La concentration de la solution de carbonate de sodium doit être adaptée à celle du lait de chaux, de manière à ce que l'on obtienne, par leur mélange, une sursaturation immédiate en carbonate de calcium et dès lors une cristallisation du carbonate de calcium. La concentration de la solution de carbonate de sodium est par exemple comprise entre 50 g/l et la saturation (465 g/l à 35°C). On utilise avantageusement une solution contenant de 100 à 400 g/l de carbonate de sodium, les concentrations de 150 à 300 g/l convenant bien. Dans cette forme d'exécution du procédé selon l'invention, la solution aqueuse de carbonate de sodium est avantageusement préparée et stockée, avant d'être traitée à l'étape (a), à une température de 20 à 90 °C, par exemple de 40 à 60 °C.

Dans une seconde forme d'exécution du procédé selon l'invention, on met en oeuvre, à l'étape (a), le carbonate de sodium sous forme solide, généralement sous forme d'une poudre. On utilise de préférence une poudre caractérisée par un diamètre moyen des particules de 50 à 500 µm.

Le lait de chaux et le carbonate de sodium sont mélangés à l'étape (a) dans des quantités respectives suffisantes pour assurer une conversion aussi complète que possible du carbonate de sodium en carbonate de calcium. On travaille le plus souvent avec un excès molaire d'hydroxyde de calcium par rapport à la quantité stoechiométrique. Dans une variante du procédé, on introduit à l'étape (a) tout le lait de chaux qui sera transformé en carbonate de calcium aux étapes (a) et (d) du procédé. De préférence, on travaille à l'étape (a) avec un excès d'hydroxyde de calcium de 1 à 20 % par rapport à la quantité stoechiométrique qui réagit avec le carbonate de sodium. De manière particulièrement préférée, cet excès est limité à 2 à 10 %.

L'étape (a) peut être effectuée à toute température supérieure ou égale à 10 °C et inférieure à 100 °C. On utilise de préférence une température supérieure ou égale à 20 °C, plus particulièrement au moins égale à 30 °C, les valeurs au moins égales à 35 °C étant préférées; on limite habituellement la température à 70 °C au maximum, de préférence 60 °C au maximum, les valeurs n'excédant pas 55 °C étant recommandées.

La durée de l'étape (a) doit être suffisante pour assurer une réaction la plus complète possible entre le carbonate de sodium et l'hydroxyde de calcium du lait de chaux. Elle est généralement d'au moins 10 minutes, de préférence d'au moins 30 minutes. Le plus souvent, la durée ne dépasse pas 2 heures. Elle ne dépasse avantageusement pas 90 minutes.

Le milieu aqueux recueilli de l'étape (a) du procédé comprend une suspension de carbonate de calcium solide et, éventuellement. d'hydroxyde de calcium solide dans une solution aqueuse d'hydroxyde de sodium (la lessive caustique).

Dans l'étape (b), on sépare le carbonate de calcium solide et la lessive caustique produits par caustification à l'étape (a). Cette séparation peut être effectuée par tout moyen connu, par exemple par filtration et lavage. On recueille ainsi, d'une part, la lessive caustique d'hydroxyde de sodium et, d'autre part, le carbonate de calcium solide. La concentration de la lessive caustique obtenue est typiquement de 6 à 12 % en poids. Selon le mode de séparation utilisé, le carbonate de calcium est recueilli sous la forme d'une suspension aqueuse ou d'un gâteau humide, contenant typiquement de 20 à 70 % de matière solide.

Dans l'étape (c) du procédé, on forme un brouet en mélangeant une partie au moins du carbonate de calcium recueilli à l'étape (b) avec du lait de chaux.

Le lait de chaux mis en oeuvre dans l'étape (c) peut être obtenu de manière similaire à celui mis en oeuvre à l'étape (a). Il peut être de concentration identique ou différente de celle du lait de chaux mis en oeuvre à l'étape (a). On utilise avantageusement des laits de chaux de mêmes concentrations aux étapes (a) et (c). En pratique, on prépare généralement du lait de chaux dans un réservoir unique et on en utilise une partie à l'étape (a) et une autre partie à l'étape (c).

Le rapport pondéral entre l'hydroxyde de calcium et le carbonate de calcium mis en oeuvre à l'étape (c) peut varier dans de larges mesures. Pour obtenir un carbonate de calcium de qualité satisfaisante, ce rapport doit être au moins égal à 0,1. De préférence, il est au moins égal à 0,2. De manière particulièrement préférée, il est au moins de 0,3. Bien que l'on puisse effectuer le procédé selon l'invention avec un rapport pondéral entre l'hydroxyde de calcium et le carbonate de calcium très élevé, ce rapport ne dépasse habituellement pas 10. Le plus souvent, il ne dépasse pas 5. De manière avantageuse, il ne dépasse pas 3.

La concentration totale en carbonate de calcium et en hydroxyde de calcium dans le brouet de l'étape (c) est typiquement de 100 à 600 g/l, avantageusement de 150 à 500 g/l.

Dans l'étape (d) du procédé, on introduit un gaz contenant du dioxyde de carbone dans le brouet de l'étape (c), pour le carbonater.

Le gaz mis en oeuvre dans l'étape (d) peut être du dioxyde de carbone non dilué ou un mélange gazeux en contenant. Lorsqu'il s'agit d'un mélange gazeux, la concentration en dioxyde de carbone dans le mélange est généralement d'au moins 5 % en volume, de préférence d'au moins 10 % en volume. Les autres constituants du mélange gazeux peuvent être tous gaz inertes vis-à-vis du carbonate de calcium et de l'hydroxyde de calcium, tels que de l'azote et/ou de l'oxygène. Des mélanges gazeux utilisables sont par exemple des gaz de combustion, préalablement débarrassés des impuretés qu'ils renferment, notamment des poussières.

Généralement, la température à laquelle est effectuée l'étape (d) est contrôlée de manière à ne pas excéder 85 °C. Elle est habituellement maintenue à au moins 10 °C. De préférence, elle est maintenue dans une gamme de 30 à 60 °C.

L'introduction du gaz dans le brouet de l'étape (c) est généralement réglée de manière à mettre en contact de 0,2 à 20 litres normaux, de préférence de 0,3 à 5 litres normaux, de dioxyde de carbone par heure et par gramme d'hydroxyde de calcium du brouet. L'introduction du gaz est poursuivie jusqu'à conversion quasi totale de tout l'hydroxyde de calcium en carbonate de calcium. En règle générale, on introduit le gaz pendant une durée de 30 minutes à 3 heures. Le plus souvent, une conversion satisfaisante est obtenue après une durée de 45 à 90 minutes.

Les étapes (c) et (d) du procédé selon l'invention peuvent être effectuées simultanément. En pratique, on préfere cependant les effectuer successivement.

A l'étape (e) du procédé selon l'invention, on recueille une suspension aqueuse de carbonate de calcium avec une concentration en carbonate de calcium typiquement de 15 à 70 % en poids, le plus souvent de 20 à 50 % en poids. Celle-ci peut être utilisée, telle quelle ou après concentration, dans différentes applications classiques du carbonate de calcium où celui-ci est mis en oeuvre sous forme de suspension aqueuse. En variante. la suspension aqueuse de carbonate de calcium recueillie à l'étape (e) est traitée pour en soutirer le carbonate de calcium sous forme de poudre sèche. A cet effet, elle peut être soumise à une filtration, une centrifugation ou une décantation et le carbonate de calcium humide peut ensuite être séché par évaporation.

Le procédé selon l'invention permet, pour une production d'hydroxyde de sodium donnée, de produire du carbonate de calcium en une quantité supérieure à la quantité stoechiométrique. Alors qu'un procédé classique de caustification produit du carbonate de calcium et de l'hydroxyde de sodium dans un rapport pondéral de 1,25:1 (rapport molaire 1:1), le procédé selon l'invention permet d'augmenter ce rapport typiquement jusqu'à des valeurs de l'ordre de 5:1, voire de l'ordre de 10:1, par un réglage adéquat du rapport pondéral entre l'hydroxyde de calcium et le carbonate de calcium mis en oeuvre à l'étape (c). Cette caractéristique du procédé selon l'invention rend son exploitation directement sur le site des usines papetières intégrées particulièrement attrayante. Celles-ci sont en effet consommatrices à la fois de carbonate de calcium et d'hydroxyde de sodium dans des proportions variables que le procédé selon l'invention peut réaliser.

En outre, bien que, dans le procédé selon l'invention, une fraction du carbonate de calcium soit produite par caustification de carbonate de sodium et une autre fraction par carbonatation d'un lait de chaux, un seul type de carbonate de calcium est finalement obtenu. Ce carbonate de calcium de qualité excellente et homogène peut être utilisé notamment en papeterie, dans les matières plastiques et dans les peintures. Il convient particulièrement bien comme matière de charge et de couchage du papier. Par rapport à du carbonate de calcium de caustification, le carbonate de calcium obtenu dans le procédé selon l'invention présente en particulier une distribution granulométrique des particules plus étroite. Le carbonate de calcium obtenu dans le procédé selon l'invention présente en effet généralement une pente granulométrique $\sigma$ de 0,9 à 1,5, alors que le carbonate de calcium de caustification présente classiquement une pente granulométrique $\sigma$ de 1,3 à 2,2, la pente granulométrique a étant définie par la relation suivante :

$$\sigma = \frac{D_{90}\text{-}D_{10}}{D_{50}}$$

dans laquelle $D_{90}$ (respectivement $D_{50}$ et $D_{10}$) représente le diamètre pour lequel 90 % (respectivement 50 % et 10 %) des particules (exprimées en poids) ont un diamètre inférieur à $D_{90}$ (respectivement $D_{50}$ et $D_{10}$). Le carbonate de calcium obtenu dans le procédé selon l'invention présente généralement un $D_{50}$ de 5,0 à 7,5 μm, alors que le carbonate de calcium de caustification présente classiquement un $D_{50}$ de 4,8 à 6,5. Ces paramètres sont définis par la méthode d'analyse granulométrique par diffraction de rayon laser utilisant un appareil de mesure de marque MALVERN® (type 2600 C).

Le carbonate de calcium obtenu dans le procédé selon l'invention présente en outre généralement

- une blancheur (B) (mesurée à une longueur d'onde de 457 μm) au moins égale à 95 % de la valeur de référence du sulfate de baryum;
- une teneur résiduelle en hydroxyde de calcium (H) (mesurée par la quantité d'ions OH produite par réaction à pH 9,5 pendant 20 minutes avec de l'acide chlorhydrique) inférieure à 2 % en poids, les valeurs inférieures à 1 % en poids étant les plus courantes.
- une dimension des cristaux élémentaires ($D_p$) constituant les particules de poudres (définie par une mesure de la perméabilité à l'air au moyen d'un appareil du type du perméamètre de BLAINE selon la norme ASTM C 204-51 en vigueur dans l'analyse des ciments, et correspondant sensiblement aux dimensions relevées par une mesure microscopique sous un grossissement de 15000 à 25000 X) égale au minimum à 0,05 μm, généralement d'au moins 0,15 μm et égale au maximum à 1 μm, généralement d'au plus 0,75 μm, des valeurs de 0,20 à 0,40 μm étant les plus courantes.

Les exemples dont la description suit, servent à illustrer l'invention. Dans ces exemples on a fabriqué des poudres de carbonate de calcium au moyen du procédé selon l'invention. Les symboles $D_p$, $D_{50}$, $\sigma$, B et H utilisés dans ces exemples ont été définis plus haut.

Exemple 1

On a introduit. dans un réacteur de 1,5 l de capacité, muni d'une double enveloppe dans laquelle circule une huile permettant de régler la température du réacteur et équipé d'un agitateur en forme d'ancre, 543 g d'un lait de chaux de concentration 2,02 M. En maintenant la température du réacteur à 50 °C, on y a ajouté sous agitation, en environ 15 minutes, 109 g de carbonate de sodium en poudre et 543 g d'eau, puis on a maintenu l'agitation pendant 1 heure. On a recueilli le milieu aqueux résultant de la caustification, on l'a filtré et on a ainsi recueilli 820 ml d'une lessive contenant 6,63 % en poids de NaOH et un gâteau de particules de carbonate de calcium, que l'on a ensuite lavé à l'eau déminéralisée. Le gâteau résultant contenait 30 % en poids de carbonate de calcium (dénommé par la suite carbonate de calcium de caustification). On a prélevé un échantillon du gâteau de carbonate de calcium de caustification et on l'a analysé. Les résultats figurent au tableau I ci-dessous. Le gâteau de carbonate de calcium de caustification a été réintroduit dans le réacteur, avec 933 g de lait de chaux de concentration 2,02 M. Sous agitation et en maintenant la température du réacteur à 40 °C, on a injecté par le fond du réacteur, pendant 80 minutes, un mélange de $CO_2$ et d'air, contenant 10 % en volume de $CO_2$, à un débit de 1250 l/h. On a ensuite recueilli la suspension de carbonate de calcium formée, on l'a filtrée et on a séché le gâteau obtenu. On a obtenu 275 g de poudre de carbonate de calcium conforme à l'invention, que l'on a analysé. Les résultats figurent au tableau I.

Tableau I

|  | Carbonate de calcium de caustification | Carbonate de calcium conforme à l'invention |
|---|---|---|
| $D_p$ | 0,29 | 0,28 |
| $D_{50}$ | 6,4 | 7,4 |
| $\sigma$ | 1,4 | 1,2 |
| B | 98,1 | 97,5 |
| H | n.d. | 1,56 |

Exemple 2

On a introduit, dans un réacteur de 3 1 de capacité, muni d'une double enveloppe dans laquelle circule une huile permettant de régler la température du réacteur et équipé d'un agitateur en forme d'ancre, 2180 g d'un lait de chaux de concentration 1,81 M. En maintenant la température du réacteur à 50 °C, on y a ajouté sous agitation, en environ 15 minutes, 399 g de carbonate de sodium en poudre et 1131 g d'eau, puis on a maintenu l'agitation pendant 1 heure. On a recueilli le milieu aqueux résultant de la caustification, on l'a filtré et on a ainsi recueilli 2324 ml d'une lessive contenant 8,41 % en poids de NaOH et un gâteau de particules de carbonate de calcium de caustification, que l'on a ensuite lavé à l'eau déminéralisée. Le gâteau résultant contenait 30 % en poids de carbonate de calcium. On a prélevé un échantillon du gâteau de carbonate de calcium de caustification et on l'a analysé. Les résultats figurent au tableau II ci-dessous. Le gâteau de carbonate de calcium de caustification a été réintroduit dans le réacteur, avec 1354 g de lait de chaux de concentration 2.09 M. Sous agitation et en maintenant la température du réacteur à 50 °C, on a injecté par le fond du réacteur, pendant 100 minutes, un mélange de $CO_2$ et d'air, contenant 10 % en volume de $CO_2$, à un débit de 1250 l/h. On a ensuite recueilli la suspension de carbonate de calcium formé, on l'a filtrée et on a séché le gâteau obtenu. On a obtenu 628 g de poudre de carbonate de calcium conforme à l'invention, que l'on a analysé. Les résultats figurent au tableau II.

Tableau II

|  | Carbonate de calcium de caustification | Carbonate de calcium conforme à l'invention |
|---|---|---|
| $D_p$ | 0,15 | 0,28 |
| $D_{50}$ | 4,9 | 5,4 |
| $\sigma$ | 1,9 | 1,1 |
| H | 4,65 | 0,82 |

Les tableaux I et II montrent le progrès apporté par l'invention en ce qui concerne la qualité du carbonate de calcium obtenu, en particulier pour ce qui concerne la distribution granulométrique et la teneur résiduelle en hydroxyde de calcium.

## EP 0 802 883 B1

**Revendications**

1.  Procédé de coproduction de carbonate de calcium et d'hydroxyde de sodium, qui comprend les étapes (a) à (e) suivantes, dans lesquelles

    (a) on fait réagir du carbonate de sodium avec du lait de chaux, de manière à obtenir un milieu aqueux comprenant du carbonate de calcium solide et de l'hydroxyde de sodium;
    (b) on sépare dudit milieu, d'une part, une lessive d'hydroxyde de sodium et, d'autre part, ledit carbonate de calcium solide;
    (c) on mélange une partie au moins dudit carbonate de calcium solide avec une quantité suffisante de lait de chaux de manière à obtenir un brouet de carbonate de calcium et d'hydroxyde de calcium, présentant un rapport pondéral entre l'hydroxyde de calcium et le carbonate de calcium au moins égal à 0,1;
    (d) on met en contact ledit brouet avec un gaz comprenant du $CO_2$; et
    (e) on recueille de l'étape (d) une suspension aqueuse de carbonate de calcium.

2.  Procédé selon la revendication 1, dans lequel le rapport pondéral entre l'hydroxyde de calcium et le carbonate de calcium à l'étape (c) est au moins égal à 0,2 et ne dépasse pas 10.

3.  Procédé selon la revendication 2, dans lequel le rapport pondéral entre l'hydroxyde de calcium et le carbonate de calcium à l'étape (c) est de 0,3 à 5.

4.  Procédé selon l'une quelconque des revendications 1 à 3, dans lequel la concentration totale en carbonate de calcium et en hydroxyde de calcium dans le brouet de l'étape (c) est de 100 à 600 g/l.

5.  Procédé selon l'une quelconque des revendications 1 à 4, dans lequel l'étape (a) est effectuée à une température de 10 à 90 °C.

6.  Procédé selon l'une quelconque des revendications 1 à 5, dans lequel l'étape (d) est effectuée à une température au maximum égale à 85 °C.


**Patentansprüche**

1.  Verfahren zur gemeinsamen Herstellung von Calciumcarbonat und Natriumhydroxid, das die folgenden Schritte (a) bis (e) umfaßt, in denen

    (a) man Natriumcarbonat mit Kalkmilch umsetzt, so daß ein wäßriges Medium erhalten wird, das festes Calciumcarbonat und Natriumhydroxid umfaßt;
    (b) man von besagtem Medium einerseits eine Natriumhydroxidlauge und andererseits besagtes festes Calciumcarbonat abtrennt;
    (c) man wenigstens einen Teil des festen Calciumcarbonats mit einer Menge an Kalkmilch mischt, die ausreicht, um eine Calciumcarbonat- und Calciumhydroxidbrühe zu erhalten, die ein Gewichtsverhältnis zwischen dem Calciumhydroxid und dem Calciumcarbonat von wenigstens gleich 0,1 aufweist;
    (d) man besagte Brühe mit einem $CO_2$ umfassenden Gas in Kontakt bringt; und
    (e) man aus dem Schritt (d) eine wäßrige Calciumcarbonatsuspension gewinnt.

2.  Verfahren gemäß Anspruch 1, bei dem das Gewichtsverhältnis zwischen dem Calciumhydroxid und dem Calciumcarbonat in Schritt (c) wenigstens gleich 0,2 ist und 10 nicht übersteigt.

3.  Verfahren gemäß Anspruch 2, bei dem das Gewichtsverhältnis zwischen dem Calciumhydroxid und dem Calciumcarbonat in Schritt (c) 0,3 bis 5 ist.

4.  Verfahren gemäß einem der Ansprüche 1 bis 3, bei dem die Gesamtkonzentration an Calciumcarbonat und Calciumhydroxid in der Brühe des Schritts (c) 100 bis 600 g/l ist.

5.  Verfahren gemäß einem der Ansprüche 1 bis 4, bei dem der Schritt (a) bei einer Temperatur von 10 bis 90 °C ausgeführt wird.

6

**6.** Verfahren gemäß einem der Ansprüche 1 bis 5, bei dem der Schritt (d) bei einer Temperatur von höchstens gleich 85 °C ausgeführt wird.

**Claims**

1. Process for the coproduction of calcium carbonate and sodium hydroxide which comprises the following stages (a) to (e), in which

   (a) calcium carbonate is reacted with milk of lime, so as to obtain an aqueous mixture comprising sodium hydroxide and solid calcium carbonate,
   (b) a sodium hydroxide lye, on the one hand, and the said solid calcium carbonate, on the other hand, are separated from the said mixture;
   (c) at least a portion of the said solid calcium carbonate is mixed with a sufficient amount of milk of lime, so as to obtain a calcium carbonate and calcium hydroxide slurry which exhibits a ratio by weight of calcium hydroxide to calcium carbonate of at least 0.1 ;
   (d) the said slurry is brought into contact with a gas comprising $CO_2$; and
   (e) an aqueous calcium carbonate suspension is collected from the stage (d).

2. Process according to Claim 1, in which the ratio by weight of the calcium hydroxide to the calcium carbonate in the stage (c) is at least equal to 0.2 and does not exceed 10.

3. Process according to Claim 2, in which the ratio by weight of the calcium hydroxide to the calcium carbonate in the stage (c) is from 0.3 to 5

4. Process according to any one of Claims 1 to 3, in which the total calcium carbonate and calcium hydroxide concentration in the slurry of the stage (c) is from 100 to 600 g/l.

5. Process according to any one of Claims 1 to 4, in which the stage (a) is carried out at a temperature of from 10 to 90°C.

6. Process according to any one of Claims 1 to 5, in which the stage (d) is carried out at a temperature of at most 85°C.